Europäisches Patentamt

(19) European Patent Office

Office européen des brevets

(11) Publication number: **0 041 329**
**B1**

(12) **EUROPEAN PATENT SPECIFICATION**

(45) Date of publication of patent specification: **10.10.84**

(21) Application number: **81302163.1**

(22) Date of filing: **15.05.81**

(51) Int. Cl.³: **B 01 D 53/04, B 01 J 20/18**

(54) **Process for the selective adsorption of oxygen.**

(30) Priority: **22.05.80 JP 67100/80**

(43) Date of publication of application:
**09.12.81 Bulletin 81/49**

(45) Publication of the grant of the patent:
**10.10.84 Bulletin 84/41**

(84) Designated Contracting States:
**BE DE FR GB LU NL**

(56) References cited:
**FR-A-2 253 709**

**IZVESTIYA AKADEMII NAUK SSSR, SERIYA KHIMICHESKAYA, September 1973, no. 9, Institute of Physical Chemistry, Academy of Sciences of the USSR, I.A. KALINNIKOVA et al. "Equilibrium adsorption of mixtures of nitrogen with oxygen on Na-A ueolite", pages 1940-1946, and translation in "Bulletin of the Academy of Sciences of the USSR", Division of Chemical Sciences", New York, 1974, pages 1891-1896**

(73) Proprietor: **MITSUBISHI JUKOGYO KABUSHIKI KAISHA**
**5-1, Marunouchi 2-chome Chiyoda-ku Tokyo (JP)**

(72) Inventor: **Izumi, Jun c/o Nagasaki Technical Institute**
**Mitsubishi Jukogyo K. K. 1-1, Akunoura-machi Nagasaki City Nagasaki Pref. (JP)**
Inventor: **Tsutaya, Hiroyuki c/o Nagasaki Technical Institute**
**Mitsubishi Jukogyo K. K. 1-1, Akunoura-machi Nagasaki City Nagasaki Pref. (JP)**
Inventor: **Amitani, Tatsuo Nagasaki Shipyard & Engine Works**
**Mitsubishi Jukogyo K. K. 1-1, Akunoura-machi Nagasaki City Nagasaki Pref. (JP)**
Inventor: **Kubo, Masayoshi Nagasaki Shipyard & Engine Works**
**Mitsubishi Jukogyo K. K. 1-1, Akunoura-machi Nagasaki City Nagasaki Pref. (JP)**
Inventor: **Maehara, Kenichi Nagasaki Shipyard & Engine Works**
**Mitsubishi Jukogyo K. K. 1-1, Akiunoura-machi Nagasaki City Nagasaki Pref. (JP)**

(74) Representative: **Sommerville, John Henry et al**
**SOMMERVILLE & RUSHTON 11 Holywell Hill St. Albans Hertfordshire, AL1 1EZ (GB)**

## Description

Background of the Invention
### 1. *Field of the Invention*

This invention relates to a novel process for the selective adsorption of oxygen in order to separate, remove or concentrate oxygen from a mixed gas consisting essentially of oxygen and nitrogen, for example the air.

### 2. *Description of the Prior Art*

The greatest characteristic of the separation, removal or concentration of oxygen from the air is that usually there is no cost incurred for a starting material since the air is used as a starting material and a price to be added to oxygen depends upon the following factors:

(a) Costs for installations necessary for separating or concentrating oxygen,

(b) Costs for supplying various powers necessary for operating apparatus,

(c) In the case where separated oxygen is needed, price of and supplemental costs for it, and the like.

Another characteristic is that separation or concentration of oxygen can be achieved either by a process for separating oxygen or by a process for separating nitrogen as far as the air is used as a starting material.

Taking into consideration the above-described factors, various economically advantageous measures have heretofore been proposed. A representative example of them is a process in which a deep cooling separation apparatus is used which is designed to cool the air to extremely low temperatures to separate oxygen or nitrogen making use of difference in the boiling point between oxygen and nitrogen. This apparatus is suited for producing a large amount of oxygen and production of most of oxygen and nitrogen in this country depends upon the deep cooling separation apparatus. However, this prior art is disadvantageous in that a large amount of power and a large-scale installations are needed for operating the process.

On the other hand, another example of the prior art separation process is a process which uses aluminasilicate based high molecular adsorbents recently developed by Union Carbide Corporation, etc. and put to practical use. Among these adsorbents, those called molecular sieves "5A" and "13X" (tradenames for products of Union Carbide Corporation) have a very high adsorptivity ($1.2$ g $N_2/100$ g at NTP) to nitrogen and therefore a process for the separation or concentration of oxygen by removing nitrogen selectively from the air using these adsorbents has been put to practical use. However, the molecular sieves of the types of "5A" and "13X" have an adsorptivity which follows Langmuir adsorption isotherm and when the pressure reachs $1.52 \times 10^5$ Pa (1.5 ata) the increase in its adsorptivity is not so large as compared with the increase in the pressure, and a very large amount of nitrogen is needed since molar ratio of $N_2/O_2$ of the air is 4. Therefore, scale merit accompanying enlargement of the apparatus is rather small, which will limit the application of this prior art process to small volume installations.

Further, a process which uses a transient metal based organic complex capable of selectively adsorbing oxygen could be considered useful. For example, a cyclic cobalt complex called "salcomine" can adsorb 1 mol of oxygen per 2 mols of salcomine. The adsorption by salcomine is reversible with respect to changes in temperature and pressure so that it is theoretically possible to achieve separation or concentration of oxygen by means of temperature increase-temperature decrease cycle or pressure increase-pressure decrease cycle of the air. However, in practice, severe deterioration of the organic complex occurs as adsorption and liberation of oxygen are repeated, and the organic complex itself is expensive. Therefore, its application will practically be limited to use as a special carrier.

In addition to the above, there are some measures which have not been put to practical use but are considered to be promising in principle, for example, filters capable of selectively permeating oxygen, oxygen pump using zirconium oxide, etc.

As stated above, the separation, removal or concentration of oxygen can generally be classified into two groups from the practical viewpoint. That is, on one hand, for a small volume oxygen production process, a pressure swing process is used in which nitrogen is removed from the air using molecular sieves, and on the other hand, for a large volume oxygen production process, a deep cooling separation process is used in which the air is cooled to an extremely low temperature. However, for each process, efforts to decrease costs for power and installations seem to have almost reached their limits already.

### Summary of the Invention

Accordingly the object of this invention is to improve the defects of the above-described conventional processes for producing oxygen, thereby decreasing costs incurred for the production of oxygen remarkably and miniaturizing the installations used in the process for the production of oxygen to a greater extent.

Brief Description of the Drawings

Other object and features of this invention will be apparent from the following description with reference to the accompanying drawings in which:

Fig. 1 shows a flow chart of a testing apparatus used for confirming effect of this invention;

Fig. 2 is a graph showing amount of dynamic adsorption at normal temperature by a Na—A type zeolite;

Figs. 3 and 4 are graphs showing amounts of dynamic adsorption by Na—A type zeolite at 0°C and −30°C, respectively; and

Fig. 5 shows a flow chart of a preferred embodiment of this invention.

Description of Preferred Embodiment

As a result of extensive research it is now found that among the above-described molecular sieves, Na—A type zeolite does not adsorb oxygen selectively at room temperature when it is charged in an adsorbing column and air is passed therethrough at high pressures but behaves, like the above-described molecular sieves "5A" and "13X", as a nitrogen-selective adsorbent, while under cooling conditions in a pressure swing process at a temperature below room temperature, the amount of oxygen adsorbed increases but that of nitrogen decreases with decreased temperature and at about −30°C the adsorption of nitrogen becomes negligible as compared with that of oxygen resulting in that the Na—A type zeolite comes to serve as oxygen-selective adsorbent for two-component system consisting essentially of oxygen and nitrogen which, in appearance, adsorbs oxygen almost exclusively.

As far as is known, such behavior of the Na—A type zeolite in the selective oxygen adsorption in a low temperature pressure swing process has not heretofore been suggested at all in the study of the conventional Na—A type zeolite on their adsorption of oxygen and nitrogen.

It should be noted, however, that Japanese Patent Publication No. 1161/65 describes the effect that Na—A type zeolite adsorbs nitrogen in an amount 3 times as large as that of oxygen at room temperature but the adsorption rate of oxygen is higher than that of nitrogen so that when passing the air through an adsorbing column charged with Na—A type zeolite at high rates the zeolite therein can in appearance behave as an oxygen-selective adsorbent in a dynamic state.

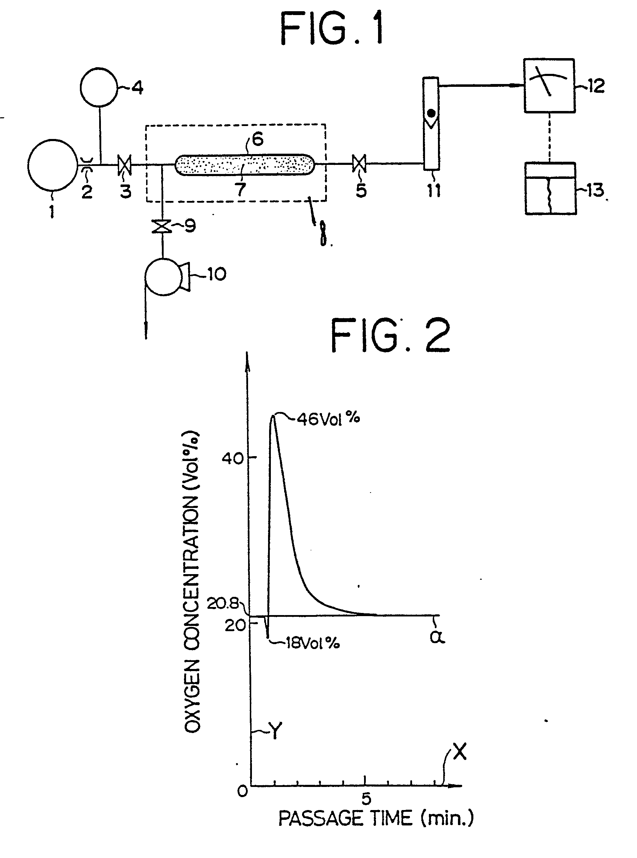

Utility of the invention described in the above Japanese Patent Publication was confirmed by an experiment in which powders of Na—A type zeolite produced by Union Carbide Corporation were washed with water satisfactorily and immersed in an aqueous NaCl solution overnight to purify such that total amount of impurities was 0.1 wt % or less and the adsorbent thus-treated was charged in an adsorbing column as shown in Fig. 1.

The air separability of the Na—A type zeolite at room temperature will be explained hereinbelow in greater detail with reference to the drawings.

Fig. 1 is a schematical illustration of an apparatus designed so as to measure the air separability of the Na—A type zeolite. Reference numeral 1 is a high pressure air cylinder. The high pressure air discharged from the cylinder is supplied, via a decompressor 2, to a valve 3. A Bourdon's tube barometer is arranged between the decompressor 2 and the valve 3 to enable measurement of the pressure. In this experiment the inlet pressure was adjusted to $5.07 \times 10^5$ Pa (5 ata) by means of the decompressor 2 and the Bourdon's tube barometer 4. In a stainless steel adsorbing column 6 having an inner diameter of 10 mm and a length of 300 ml was charged with the Na—A type zeolite 7 immediately after washing with water, which did not show any adsorptivity at all. For this reason, the adsorbing column 6 was arranged in a temperature controlling bath 8 capable of being adjusted of its temperature over the range of from −70°C to 600°C. In order to pretreat the adsorbent the valve 3 and a valve 5 were closed, a valve 9 was opened, the pressure in the adsorbing column was reduced to 13.33 Pa (0.1 Torr) using a vacuum pump 10, the temperature controlling bath 8 was adjusted to 450°C and dehydration treatment was carried out for 1 hour. Then, after the bath was cooled again to room temperature the valves 3, 5 were opened again to pass the high pressure air which was fed *in toto*, via a float type flow meter 11, to an oxygen densitometer 12 to measure the outlet $O_2$ concentration. The data thus-obtained were recorded with an automatic recording meter 13.

Fig. 2 shows an example of change in the outlet $O_2$ concentration with the passage of time in the case where the testing apparatus as shown in Fig. 1 was used and the adsorbing column 6 was charged with 15 g of the Na—A type zeolite powders with adjusting the inlet gas flow rate to 100 N ml/min and the inlet air pressure to $5.07 \times 10^5$ Pa (5 ata).

In Fig. 2, the horizontal axis X indicates time with its scale being calibrated in minute, while the vertical axis Y represents oxygen concentration in volume %. In order to indicate the inlet oxygen concentration a standard line $\alpha$ is drawn at an oxygen concentration of 20.8%. From the data on change in the outlet oxygen concentration of the Na—A type zeolite with lapse of time shown in Fig. 2 it can be seen that the outlet oxygen concentration decreases initially from 20.8% to 18%, then increases rapidly to 46% followed by decreasing gradually till the breakthrough of the adsorbent which occurs about 5 minutes after the outset of passing the air.

As will be clear from the above data, the amount of oxygen adsorbed per unit time is larger than the amount of nitrogen adsorbed per unit time in the initial stage of adsorption and as a result the outlet oxygen concentration decreases. However, with lapse of time, the amount of nitrogen adsorbed per

3

O 041 329

unit time exceeds that of oxygen adsorbed per unit time and the outlet oxygen concentrations increases. Thereafter, the adsorbent becomes saturated with oxygen and nitrogen and therefore the outlet oxygen concentration comes to decrease gradually and reaches finally the inlet gas concentration.

On the other hand, the amount of oxygen or nitrogen adsorbed by Na—A type zeolite in a single component system of oxygen or nitrogen is 2.2 ml of oxygen or 6.2 ml of nitrogen per g of the adsorbent under the conditions of 20°C and $1.015 \times 10^5$ Pa (1 ata) as described in Kitagawa and Suzuki: "Fundamentals and Design of Adsorption" page 226.

Putting these facts together, it is presumed that the above-described phenomena occur since the speed of diffusion of oxygen onto the adsorbent is larger than that of nitrogen although the amount of nitrogen is 3 times as large as that of oxygen adsorbed and therefore the outlet oxygen concentration is naturally expected to be higher.

Further, change in the outlet oxygen concentration with lapse of time as shown in Fig. 2 was determined using the same apparatus as shown in Fig. 1 with changing the inlet gas flow rate to 50,200 or 300 N ml/min and keeping other conditions the same as those in the case where it is 100 N ml/min.

Maximum and minimum outlet oxygen concentrations under each flow rate condition are shown in Table 1.

TABLE 1

| Inlet Gas Flow Rate (N·ml/min) | Pressure of Absorbing Tower [Pa × 10⁻⁵ (ata)] | Amount of Adsorbent Charged (g) | Temperature (°C) | Outlet $O_2$ Concentration | |
|---|---|---|---|---|---|
| | | | | Min. (vol %) | Max. (vol. %) |
| 50 | 5.07 (5) | 15 | 25 | 20 | 52 |
| 200 | 5.07 (5) | 15 | 25 | 16 | 38 |
| 300 | 5.07 (5) | 15 | 25 | 15 | 30 |
| 100 | 5.07 (5) | 15 | 25 | 18 | 46 |

As shown in Table 1, both minimum and maximum values of the outlet oxygen concentration decrease with increased inlet gas flow rate over the range tested. Accordingly, the allegation in Japanese Patent Publication No. 1161/65 that Na—A type zeolite adsorbs more nitrogen than oxygen but adsorbs oxygen faster than nitrogen is true. On the other hand separation of oxygen or nitrogen from the air with Na—A type zeolite in a single fractionation treatment, however, is impossible as is admitted in the above publication.

As a result of tests on the air separability of Na—A type zeolite at a temperature lower than room temperature it has further been found that Na—A type zeolites have special properties which have as far as is known not been described in or suggested from any publications at all. That is, Na—A type zeolites exhibit the above-described air separability at room temperature, while both minimum and maximum values of the outlet oxygen concentration decrease with decreased temperature and they behave as a complete oxygen-preferential adsorbent under dynamic adsorption conditions where at about −30°C, the amount of nitrogen adsorbed is so small as compared with that of oxygen adsorbed that the former can be considered negligible.

The process for the selective adsorption and separation of oxygen according to this invention is superior in purity of the outlet nitrogen gas and oxygen collectivity of the adsorbent over the conventional processes for the adsorption and separation of oxygen using Na—A type zeolite at room temperature since selectivity of the adsorbent is very high in this invention.

Hereinafter, efficiency of this invention will be explained with reference to Fig. 1. Testing conditions used were the same as in the above-described air separation test conducted at room temperature except that the temperature controlling bath 8 was adjusted to a temperature lower than room temperature. (Inlet air pressure: $5.07 \times 10^5$ Pa (5 ata), gas flow rate: 100 N ml/min, Amount of adsorbent charged: 15 g).

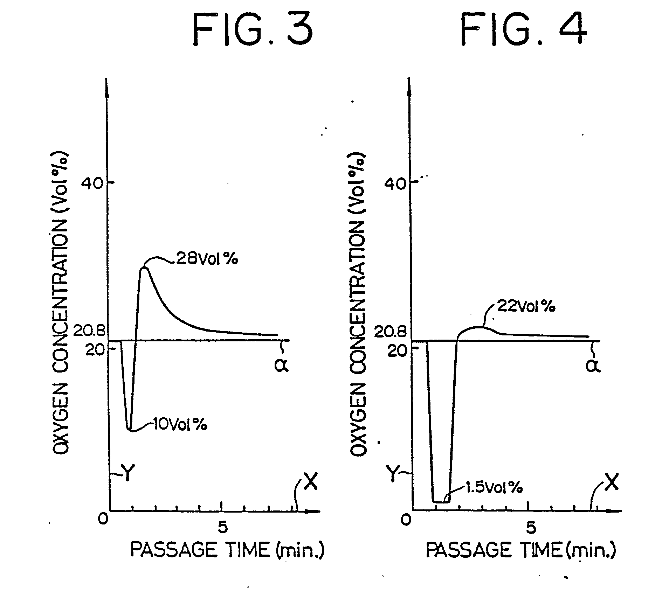

Under these conditions, the temperature of the temperature controlling bath 8 was decreased from room temperature to −30°C to cool the inlet air and the adsorbent and change in the outlet oxygen concentration with lapse of time for each temperature was measured. Data on change in the outlet oxygen concentration with lapse of time when the temperature of adsorbing tower was adjusted to 0°C and −30°C are shown in Figs. 3 and 4, respectively. In these figures, the reference numerals are the same as used in Fig. 2.

The graphs shown in Figs. 2, 3 and 4 are based on the data of repeated adsorption carried out by

4

closing the valves 3, 5 after the breakthrough of the adsorbent, opening a valve 9, regenerating the adsorbed gas under isothermal conditions using the vacuum pump 10, reopening the valves 3, 5, reclosing the valve 9 and passing high pressure air through the adsorbing column. In adsorption and description cycles each for at least about 24 hours, data on change in the outlet oxygen concentration with lapse of time obtained under the same conditions always showed a good reproducibility.

As will be clear from Fig. 3, at about 0°C, the initial decrease of the outlet oxygen concentration amounts to a minimum of 10% and the increase in the oxygen concentration which follows remains to a maximum of about 28%. Further, apparent oxygen adsorption increases considerably.

Further, Fig. 4 shows that in the change in the outlet oxygen concentration with lapse of time, the initial decrease in the oxygen concentration reduces to 1.5% and after staying in the neighbourhood of 1.5% for a while it increases gradually, but its maximum value is 22% at most.

Moreover, according to the description in "Zeolite and its application" edited by Takahashi p. 164, it is reported that the amounts of oxygen and nitrogen adsorbed by Na—A type zeolite in a single component system at low temperatures are 12.5 ml of nitrogen and 4.4 ml of oxygen, respectively, per g of the Na—A type zeolite under the conditions of 0°C and $1.015 \times 10^5$ Pa (1 ata) and 50 ml of nitrogen and 17.6 ml of oxygen, respectively, per g of the Na—A type zeolite under the conditions of −30°C and $1.015 \times 10^5$ Pa (1 ata), and that the amount of oxygen adsorbed does not exceed that of nitrogen adsorbed before temperature is decreased to about −110°C or lower.

Breck, D.W.: Zeolite Molecular Sieves — structure chemistry and use, Wiley 1974 Chapter 8 similarly teaches that the potential amount of $N_2$ adsorbed is greater than that of $O_2$ at temperatures below room temperature at which a pressure swing process could sensibly be operated and that not until about −110°C does this potential amount change in favour of $O_2$ absorption.

The above-described excellent selectivity in the adsorption of oxygen under dynamic pressure swing conditions is ascribable not to the potential amount of oxygen adsorbed being in excess of that of nitrogen adsorbed at low temperatures but to decrease in the adsorption rate of nitrogen to a negligible level as compared with that of oxygen at the decreased temperatures at which the pressure swing process can sensibly be carried out.

As stated above, the low temperature pressure swing process for the selective adsorption and separation of oxygen with Na—A type zeolite according to this invention is a quite novel process for adsorption and separation which is selective to oxygen and has not been suggested in any publications as far as is known. This process has an advantage in that a very large amount of oxygen can be adsorbed as well as the following features.

(a) Since the amount of oxygen adsorbed increases very sharply depending on the pressure applied even at low temperatures pressure swing process can be carried out with ease at low temperatures.

(b) The amounts of oxygen adsorbed at 0°C, −30°C and −50°C are twice, 8 times and 18 times, respectively, as large as that at room temperature and this tendency is continued at least to the boiling point of oxygen (−186°C).

(c) On the other hand, the amount of nitrogen decreases with decreased temperature under dynamic pressure swing conditions and it becomes negligible at about −30°C.

The process for the selection adsorption and separation of oxygen according to this invention can widely be applied to a variety of fields. For example, when it is applied to an oxygen concentration apparatus making use of molecular sieves it provides an oxygen adsorptivity which is overwhelmingly superior over that of the conventional $N_2$ adsorption type molecular sieves, thereby cutting a path to miniaturization of apparatus used and reduction in the costs for the concentration of oxygen.

According to one embodiment of the invention, it is noted that under the conditions of a flow rate of 100 N ml/min and a pressure of $5.07 \times 10^5$ Pa (5 ata) almost complete oxygen selectiveness is shown when cooling to −30°C.

How the outlet oxygen concentration will vary depending upon (1) flow rate, (2) pressure, (3) cross-section of adsorbing column, (4) length of the adsorbing column and the like factors under the above-described conditions can be inferred with ease by one skilled in the art from the teaching of Kitagawa and Suzuki: "Fundamentals and Design of Adsorption" p. 89—p. 92.

Above −30°C the adsorption rate of nitrogen reaches an innegligible level and analyses similar to the above but directed to two-component system will provide sufficient answers. All these results show that the lower the temperature is the greater is the difference in coefficient of mass transfer between oxygen and nitrogen, which means practically that lower inlet flow rate is allowed at lower temperatures but higher inlet flow rate should be set up at temperatures closer to room temperature.

At any rate, once the data on change in the outlet oxygen concentration with lapse of time as shown in Figs. 2 to 4 are obtained design of adsorbing column and of its operation can be made within the knowledge of the conventional art.

Temperature conditions at lower temperature side cannot be selected depending upon the above-described properties of adsorbents alone. For example, in the case where a sufficient amount of waste heat is obtained an absorption refrigerating machine may be used. In this case, a temperature of about −25°C is optional.

When high pressure nitrogen gas after having passed through the absorbing column and a vortex tube are used on combination an optional temperature is about −10°C and when an expansion turbine driven by pressure nitrogen gas after having passed through the adsorbing column a temperature range of −30°C to −50°C is preferred. Thus, suitable temperature which is to be selected at lower temperature side depends on the manner of cooling rather than the properties of the adsorbent.

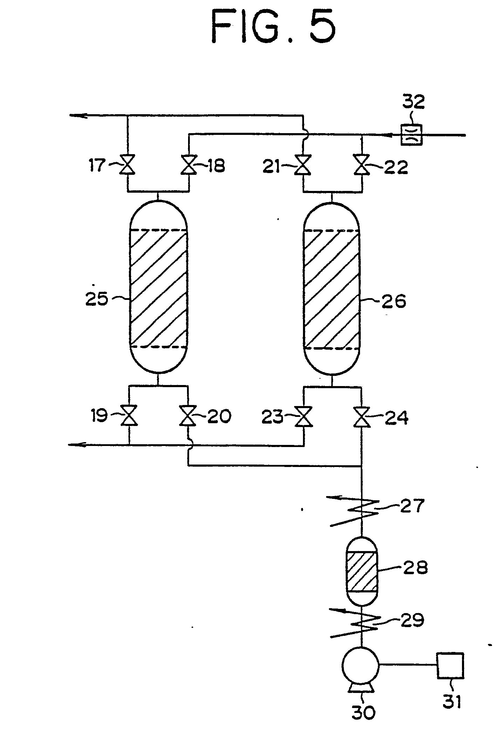

Hereinbelow, the process for the selective adsorption and separation of oxygen according to this invention will be explained with reference to Fig. 5.

Fig. 5 shows a schematic illustration of a pressure swing type oxygen producing apparatus. In Fig. 5, reference numerals 17—24 are automatic change-over valves, 25, 26 and adsorbing columns packed with the oxygen adsorbent used in this invention. 27 is a heat exchanger for cooling to low temperature, 28 is an adsorbing column for dehumidifying and removing carbonaceous gas, 29 is a precooler, 30 is an air compressor, 31 is an air strainer and 32 is a throttle valve. Control device and the like for controlling the automatic change over valves, etc. are not shown.

Now, it is assumed that the adsorbing column 25 is in the step of adsorption and the adsorbing column 26 in the step of regeneration. The air supplied through the air strainer 31 and removed of dusts is pressurized by the air compressor 30 and then predehydrated and cooled to room temperature in the precooler 29. After dehumidifying and removing carbonaceous gas in the adsorbing column 28, the air is further cooled in the heat exchanger for cooling to low temperature 27 to −30°C and is fed via the valve 20 to the adsorbing column 25 in which oxygen in the pressurized air is adsorbed selectively by the adsorbent and the air is enriched with nitrogen. This nitrogen-rich air is fed out of the adsorbing column 25 through the valve 17. At this moment the valves 17, 20 attached to the adsorbing column 25 are opened and the valves 18, 19 are closed.

On the other hand, the adsorbent in the adsorbing column 26 is regenerated under reduced pressure while adsorption operation is under way in the adsorbing column 25. That is, at that time of the valves 21 to 24 attached to the adsorbing column 26, the valves 21, 22, 24 are closed and the valve 23 is open and the pressure within the adsorbing column 26 is reduced to atmospheric or subatmospheric pressure to desorb a portion of the adsorbate adsorbed during the step of adsorption and the air enriched with oxygen is fed out from the adsorbing column via the valve 23.

As soon as the step of pressure reduction is completed the valve 22 is opened and the air is fed into the adsorbing column 26 via the throttle valve 32 and the valve 22 by means of a ventilating means (not shown) to operate a step of scavenging in which oxygen-rich air-gap gas and the remaining adsorbate in the adsorbing column are brought out via the valve 23.

As soon as the above step is completed the adsorbing column 26 is subjected to the step of adsorption and at the same time the adsorbing column 25 is subjected to the step of regeneration.

As stated above the steps of adsorption and regeneration are repeated continually to take out oxygen-rich air and (or) nitrogen-rich air.

According to the preferred embodiment of this invention an adsorbing column having an inner diameter of 50 mm and a length of 600 mm is packed with 1 kg of Na—A type zeolite molded into balls of about 1 mm in diameter using a conventional tablet machine, and adsorption and separation of oxygen is carried out under low temperature conditions of inlet air flow rate of 20 Nl/min and a temperature of −30°C with the pressure of the air supplied being swung between $1.015 \times 10^5$ and $5.07 \times 10^5$ Pa (1 and 5 ata).

The product nitrogen concentration and the amount of nitrogen separated downstream of the valves 17, 21 and the product oxygen concentration and the amount of oxygen recovered when the process as shown in Fig. 5 is operated under the above-described conditions are shown in Table 2.

At 25°C no product nitrogen could be obtained downstream of the valves 17, 21 and 45% of oxygen passed. This is considered to be ascribable to the fact that a slight decrease in the oxygen concentration in the initial stage of adsorption observed in the small air separation testing apparatus shown in Fig. 1 is set off by nitrogen adsorption which followed. Therefore, higher inlet flow speed is necessary at about 25°C.

## TABLE 2

| Shape of Adsorbing Column: | 50 mm in inner diameter and 600 mm in length |
| --- | --- |
| Amount of Adsorbent Charged: | 1 kg |
| Pressure Swing: | $1.015 \times 10^5$ to $5.07 \times 10^5$ Pa (1 to 5 ata) |
| Inlet Air Flow Rate: | 20 Nl/min |
| Cycle Time: | 5 min |
| Temperature of Adsorbing Column: | $-30°C$ |
| Product $N_2$ Concentration: | 99% |
| Product $N_2$ Recovery: | 50 l/cycle |
| Product $O_2$ Concentration: | 88% |
| Product $O_2$ Recovery: | 14 l/cycle |

## Claim

A process for the selective adsorption of oxygen from a predominantly two-component mixed gas consisting essentially of oxygen and nitrogen, which comprises selectively adsorbing oxygen from said mixed gas by a pressure swing adsorption operation at a temperature above $-110°C$ but below room temperature, using a Na—A type zeolite as an adsorbent.

## Patentanspruch

Verfahren zur selektiven Absorption von Sauerstoff aus einem vorzugsweise zwei Komponenten enthaltenden Gasgemisch, das im wesentlichen aus Sauerstoff und Stickstoff entsteht, umfassend die Verfahrensschritte des selektiven Absorbierens von Sauerstoff aus dem Gasgemisch durch eine Druckschwingungsabsorption bei einer Temperatur von oberhalb $-110°C$, jedoch unter Raumtemperatur, und unter Anwendung eines Zeolits vom Na—A-Typus als Absorptionsmittel.

## Revendication

Procédé pour l'adsorption sélective de l'oxygène d'un mélange gazeux à deux composants prédominants, mélange constitué essentiellement d'oxygène et d'azote, dans lequel on exécute une adsorption sélective de l'oxygène dudit mélange gazeux en effectuant une adsorption avec des variations cycliques de pression, à une température supérieure à $-110°C$ mais inférieure à la température ambiante, en utilisant comme adsorbant une zéolithe du type Na—A.

# FIG. 1

# FIG. 2

46 Vol %

OXYGEN CONCENTRATION (Vol%)

40

20.8
20

18 Vol %

α

Y

X

0

5

PASSAGE TIME (min.)

1

# FIG. 3

# FIG. 4

# FIG. 5